# EUROPÄISCHE PATENTSCHRIFT

(11) **EP 2 382 410 B1**
(45) Veröffentlichungstag und Bekanntmachung des Hinweises auf die Patenterteilung: **04.12.2013**
(21) Anmeldenummer: 10703821.8
(22) Anmeldetag: 12.01.2010
(51) Int. Cl.: F16K 31/56, F16K 47/02, F01D 17/14

(54) **SCHNELLSCHLUSSVENTIL**
Quick-closing valve
Soupape à fermeture rapide

(30) Priorität: 29.01.2009 EP 09001256
(43) Veröffentlichungstag der Anmeldung: 02.11.2011
(73) Patentinhaber: Siemens Aktiengesellschaft, 80333 München (DE)
(72) Erfinder: ZIMMER, Gerta, 45468 Mülheim an der Ruhr (DE); HISS, Florian, 45468 Mülheim an der Ruhr (DE)
(86) Internationale Anmeldenummer: PCT/EP2010/050272
(87) Internationale Veröffentlichungsnummer: WO 2010/086215

(56) Entgegenhaltungen:
- EP-A- 1 079 161
- EP-A- 1 988 296
- DD-A1- 201 041

## Beschreibung

Die Erfindung betrifft ein Schnellschlussventil, insbesondere für eine Dampfturbine, wobei das Schnellschlussventil zwischen einem ersten und einem zweiten Druckraum angeordnet ist, mit einer in einem Ventilgehäuse angeordneten Hubkolbenstange und einem Hubraum, der mindestens eine Begrenzungsfläche umfasst, die mit der Hubkolbenstange verbunden ist, wobei einem Auslasskanal des Hubraums eine Blende mit veränderlichem Querschnitt zugeordnet ist. Sie betrifft weiterhin ein Verfahren zum Betreiben eines Schnellschlussventils.

In einer Dampfturbine wird die Enthalpie von in einem Dampferzeuger erzeugtem Dampf zur Erzeugung mechanischer Energie genutzt. Dazu wird Heißdampf über eine Anzahl von Leit- und Laufschaufeln geleitet, wobei die Leitschaufeln am Leitschaufelträger bzw. Innengehäuse, d. h. dem unbeweglichen Stator der Turbine, befestigt sind und die Laufschaufeln am Rotor, d. h. der rotierenden Welle der Turbine.

Häufig wird die Frischdampfzufuhr in die Dampfturbine durch Düsenregelung mittels einer Regelstufe, auch erste Turbinenstufe genannt, geregelt. Eine solche Regelstufe weist üblicherweise verschieden große Beaufschlagungssektoren auf, denen der Frischdampf jeweils über einen Frischdampfeinlass mit mehreren Regelventilen zugeführt wird. Derartige Regelventile können jedoch auch bei anderen Bauweisen vorhanden sein. Durch verschiedene Einstellungen der Regelventile kann die Dampfturbine bei einer Mehrzahl von Teillastpunkten betrieben werden sowie auch innerhalb dieser Teillastpunkte zugehörigen Lastbereichen. Hierfür werden die sequentiell betätigbaren Regelventile entweder geschlossen oder vollständig oder geregelt geöffnet.

Als Sicherheitsmaßnahme ist den Regelventilen üblicherweise jeweils ein Schnellschlussventil vorgeschaltet. Dadurch kann beispielsweise bei Ausfall eines Regelventils die Dampfzufuhr schnell unterbrochen werden und eine Abschaltung der Dampfturbine herbeigeführt werden.

In bestimmten Betriebsfällen, beispielsweise bei Ausfall eines Regelventils in Schließrichtung, kann es unter Umständen zu großen Druckstoßbelastungen in der angeschlossenen Dampfleitung kommen. Dieses Problem kann beispielsweise bei Dampfturbinen mit vier separaten Regelventilen auftreten: Beim Ausfall eines Regelventils kann es dazu kommen, dass drei Ventile ordnungsgemäß abgesperrt werden, wohingegen das vierte Ventil offen bleibt. Daraus resultiert ein wesentlich höherer Dampfmassenstrom durch das verbleibende Ventil und damit, bei Absperrung durch das Schnellschlussventil, ein wesentlich höherer Druckstoß in der Dampfleitung.

Dieses Problem kann beispielsweise dadurch gelöst werden, dass der Ventilantrieb durch Verwendung spezieller Spalten im Ölantrieb des Schnellschlussventils sukzessive verlangsamt wird, vgl z.B. EP 1988296 A1. Beispielsweise kann eine Folge von Blenden im Strömungsweg eines Auslasskanals angeordnet werden, durch die das Öl strömt, wobei eine nach der anderen der Blenden durch die sich schließenden Hubkolbenstange verdeckt wird, so dass die gesamte Blendenfläche beim Schließen des Ventils ihren Querschnitt verkleinert und so die Ventilschließzeit erhöht wird. Hierdurch kann zwar der Druckstoß in der Dampfleitung reduziert werden, jedoch wird auch die gesamte Schließzeit des Schnellschlussventils auch in eigentlich unkritischen Betriebsfällen unerwünschterweise erhöht.

Der Erfindung liegt daher die Aufgabe zugrunde, ein Schnellschlussventil, insbesondere für eine Dampfturbine, und ein Verfahren zum Betreiben eines Schnellschlussventils anzugeben, welches in allen Betriebszuständen der Dampfturbine eine zuverlässige Schnellabschaltung ermöglicht, gleichzeitig Beschädigungen der Dampfleitung verhindert und somit eine besonders hohe Lebensdauer der Dampfturbine erzielt.

Bezüglich des Schnellschlussventils wird diese Aufgabe erfindungsgemäß gelöst, indem die Blende derart ausgelegt ist, dass der Querschnitt von der Druckdifferenz zwischen dem ersten und dem zweiten Druckraum abhängig ist.

Die Erfindung geht dabei von der Überlegung aus, dass eine besonders hohe Lebensdauer der Dampfturbine durch eine Verminderung des Druckstoßes beim Schließen der Schnellschlussventile im eingangs beschriebenen Störfall erreichbar wäre. Dies ist durch eine Erhöhung der Schließzeit des Schnellschlussventils erreichbar, die jedoch nicht in allen Betriebszuständen, sondern nur im beschriebenen Störfall erfolgen sollte. Dabei ist die hohe Schließgeschwindigkeit im Störfall im Wesentlichen darauf zurückzuführen, dass sich im Verlauf des Schließens ein extrem hoher Differenzdruck über das Ventil, d. h. zwischen dem ersten und dem zweiten Druckraum einstellt. Ausgehend von der Erkenntnis, dass die Kraft in Schließrichtung des Schnellschlussventils dabei proportional zum Produkt aus Ventilkegelfläche und Druckdifferenz über das Ventil ist, sollte, um nun auch bei einer derart hohen Druckdifferenz ein langsames Schließen des Schnellschlussventils zu erreichen, die Blende derart ausgelegt werden, dass sich der Querschnitt nicht hubabhängig verändert, sondern in Abhängigkeit vom Differenzdruck über das Schnellschlussventil.

In vorteilhafter Ausgestaltung ist die Blende dabei derart ausgelegt, dass sich der Querschnitt der Blende bei Erhöhung der Druckdifferenz verkleinert. Somit kann sichergestellt werden, dass bei einer sehr hohen Druckdifferenz, d. h. im Falle eines sehr hohen Dampfmassenstroms durch das Schnellschlussventil, ein besonders langsames Schließen des Schnellschlussventils erreicht wird und der entstehende Druckstoß in der Dampfleitung durch Absperrung des Schnellschlussventils verringert wird. Eine derartige Verlangsamung des Schließprozesses und des Druckgradienten in der Dampfleitung kann somit Schäden in der Dampfleitung bei einer Schnellabschaltung der Dampfturbine verhindern.

Die Messung des Differenzdruckes über das Schnellschlussventil, d. h. zwischen dem ersten Druckraum und dem zweiten Druckraum, zwischen denen das Schnellschlussventil angeordnet ist, sollte dabei über eine einfache mechanische Anordnung erfolgen. Dabei sollte vorteilhafterweise zwischen dem ersten Druckraum und dem zweiten Druckraum ein Verbindungskanal angeordnet sein, in dem ein mit einer Feder verbundener Schieber angeordnet ist. Abhängig vom Differenzdruck zwischen den beiden Druckräumen, der dann jeweils auf den gegenüber liegenden Seiten des Schiebers ebenso vorliegt, wird der Schieber dann entgegen der Rückstellkraft der Feder verschoben. Die Auslenkung des Schiebers bzw. der Feder ist dann ein direktes Maß für die Druckdifferenz der beiden Druckräume. Somit ist auf besonders einfache Weise eine Bestimmung des Differenzdrucks zwischen dem ersten und dem zweiten Druckraum möglich.

In weiterer vorteilhafter Ausgestaltung ist dabei der Schieber mit der Blende mechanisch verbunden. Da die Auslenkung des Schiebers ein direktes mechanisches Signal für die Druckdifferenz darstellt, kann diese über eine mechanische Anordnung direkt auf die Blende übertragen werden. So kann die Auslenkung der Feder bzw. des Schiebers direkt auf eine einfache Schiebeblende übertragen werden, es sind jedoch auch andere mechanische oder auch elektronisch gesteuerte Anordnungen denkbar.

Bezüglich des Verfahrens wird die Aufgabe gelöst, indem der Querschnitt der Blende von der Druckdifferenz zwischen dem ersten und dem zweiten Druckraum abhängig ist.

In vorteilhafter Ausgestaltung wird dabei die Schließgeschwindigkeit bei einer Erhöhung der Druckdifferenz verlangsamt.

Vorteilhafterweise umfasst eine Gas- und Dampfturbinenanlage eine derartige Dampfturbine.

Die mit der Erfindung erzielten Vorteile bestehen insbesondere darin, dass durch die Auslegung einer Blende eines Schnellschlussventils derart, dass der Querschnitt von der Druckdifferenz zwischen dem ersten und dem zweiten Druckraum abhängig ist, eine Schließzeiterhöhung des Schnellschlussventils nur im Störfall und nicht im Nominalfall erreicht wird. Dadurch kann im Störfall eine Beschädigung der Dampfleitung der Dampfturbine verhindert werden, ohne eine Schließzeiterhöhung beim normalen Schnellschluss der Dampfturbine in Kauf nehmen zu müssen. Dies hat einen zuverlässigen Betrieb der Dampfturbine bei gleichzeitig erhöhter Lebensdauer insbesondere im Falle eines Störfalles zur Folge.

Ein Ausführungsbeispiel der Erfindung wird anhand einer Zeichnung näher erläutert. Darin zeigen:
- FIG 1: ein Schnellschlussventil,
- FIG 2: ein Schnellschlussventil mit einer Blende mit hubabhängiger Querschnittsfläche,
- FIG 3: schematisch ein Schnellschlussventil mit einer Blende mit druckabhängiger Querschnittsfläche,
- FIG 4: eine Darstellung der Querschnittsfläche der Blende als Funktion der Druckdifferenz,
- FIG 5: eine Darstellung des Dampfmassenstroms gegen die Zeit bei einem Schnellschluss des Ventils im Störfall, und
- FIG 6: eine Darstellung des Dampfmassenstroms als Funktion der Zeit im Nominalfall.

Gleiche Teile sind in allen Figuren mit denselben Bezugszeichen versehen.

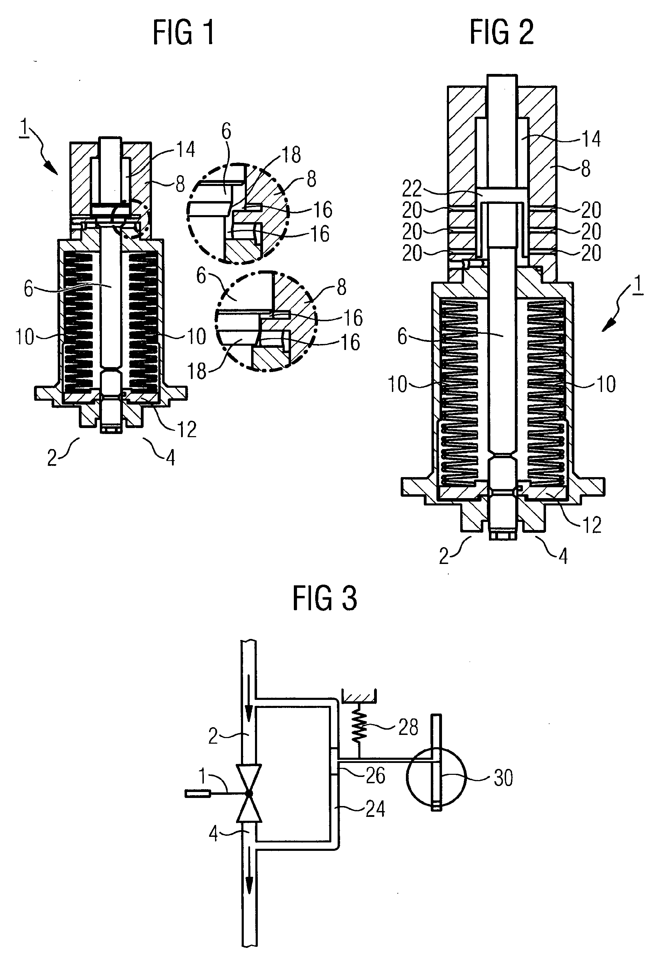

FIG 1 zeigt den Antrieb eines Schnellschlussventils 1, welches einen ersten Druckraum 2 und einen zweiten Druckraum 4 gegeneinander verschließen kann. Dazu umfasst das Schnellschlussventil 1 eine Hubkolbenstange 6, welche in einem Ventilgehäuse 8 angeordnet ist und sich in Richtung der Druckräume 2, 4 absenken kann. Das Schnellschlussventil 1 umfasst weiterhin eine Anzahl von Federn 10, welche zwischen einem Bereich des Ventilgehäuses 8 und einem gegenüber liegenden Federteller 12 angeordnet sind, die mit der Hubkolbenstange 6 verbunden ist.

Die FIG 1 zeigt das Schnellschlussventil 1 im ausgelösten, d. h. die Druckräume 2, 4 gegeneinander verschließenden Zustand. Im geöffneten Zustand sind die Federn 10 vorgespannt und bei einer Auslösung des Schnellschlussventils bewegt die Federkraft der Federn 10 die Hubkolbenstange 6 in Richtung der Druckräume 2, 4.

Zur Regelung der Schließgeschwindigkeit umfasst das Schnellschlussventil 1 einen Hubraum 14, welcher im geöffneten Zustand des Schnellschlussventils 1 mit Öl gefüllt ist. Beim Schließen des Schnellschlussventils 1, d. h. bei der Bewegung der Hubkolbenstange 6, strömt das Öl durch eine Anzahl von Blenden 16, deren Querschnittsfläche im Wesentlichen durch den Abstand zwischen der Oberfläche 18 der Hubkolbenstange 6 und dem Ventilgehäuse 8 bestimmt ist. Durch eine konische Ausformung der Oberfläche 18 der Hubkolbenstange 6 sowie des Ventilgehäuses 8 im Bereich der Blenden 16 wird nun die Blendenquerschnittsfläche beim Schließen der Hubkolbenstange 6 immer weiter verkleinert, wie in den vergrößerten Darstellungen auf der rechten Seite der FIG 1 erkennbar ist.

Durch die konische Ausformung werden die weiter oben liegenden Blenden 16 früher verschlossen, so dass im darunterliegenden Hubbereich der Öldurchfluss nur noch durch die verbleibenden Blenden 16 möglich ist, damit reduziert sich die Schließgeschwindigkeit.

Die obere vergrößerte Darstellung zeigt die Hubkolbenstange 6 in einer leicht geöffneten Position, während die untere Darstellung der Hubkolbenstange 6 in vollständig geschlossener Position zeigt. Deutlich ist der verkleinerte Querschnitt der Blenden 16 in der unteren Darstellung zu erkennen.

Zur weiteren Verlangsamung der Schließgeschwindigkeit des Schnellschlussventils 1 können in das Ventilgehäuse 8 weitere Auslassöffnungen 20 eingebracht sein, wie in FIG 2 dargestellt. Dabei ist an der Hubkolbenstange 6 eine Verschlussvorrichtung 22 angebracht, die mit den Auslassöffnungen 20 eine Blende mit veränderlichem Querschnitt bildet. Beim Schließen der Hubkolbenstange 6 bewegt sich die Verschlussvorrichtung 22 nach unten und verschließt nach und nach die Auslassöffnungen 20, so dass sich der Querschnitt mit schließender Hubkolbenstange 6 immer weiter verkleinert und so die Schließgeschwindigkeit verringert.

Nachteilig an dieser Anordnung ist, dass sie die Schließgeschwindigkeit in jedem Betriebszustand erhöht, ohne dass eine derart langsame Schließgeschwindigkeit überhaupt notwendig ist. Daher sollte die Schließgeschwindigkeit, d. h. die Verkleinerung der Querschnittsfläche der Blende davon abhängig gemacht werden, ob ein Störfall vorliegt, d. h. ein Betriebszustand, der eine langsame Schließgeschwindigkeit erforderlich macht. Dazu sollte die Querschnittsfläche der Blende abhängig vom Differenzdruck zwischen den Druckräumen 2, 4 sein.

Dazu ist, wie in FIG 3 dargestellt, zwischen den Druckräumen 2, 4 ein Verbindungskanal 24 angeordnet, in welchem ein Schieber 26 angeordnet ist, an dem eine Feder 28 befestigt ist. Der Differenzdruck wirkt somit auch auf den Schieber 26 und bestimmt damit die Auslenkung der Feder 28. Somit liegt ein direktes mechanisches Signal für den Differenzdruck zwischen den Druckräumen 2, 4 vor. Dieses kann nun direkt mechanisch an die Blende 30 des Schnellschlussventils 1 gekoppelt werden, so dass sich die Querschnittsfläche der Blende 30 bei einem hohen Differenzdruck zwischen dem ersten Druckraum 2 und dem zweiten Druckraum 4 und einer entsprechend großen Auslenkung des Schiebers 26 verkleinert. Damit wird der Ölfluss im Antrieb des Schnellschlussventils 1 verlangsamt und so eine besonders langsame Schließgeschwindigkeit in kritischen Betriebszuständen, d. h. bei großem Differenzdruck, erreicht.

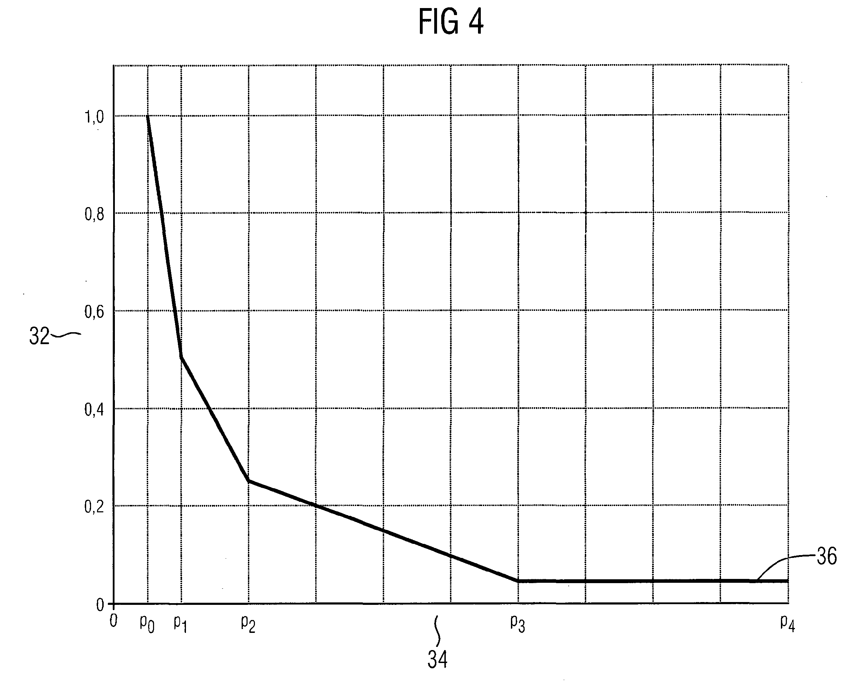

FIG 4 zeigt nun die für eine Simulation verwendete relative Querschnittsfläche 32 der Blende 30 als Funktion des Differenzdrucks 34 zwischen dem ersten Druckraum 2 und dem zweiten Druckraum 4. Die Kurve 36 zeigt den Verlauf der Querschnittsfläche 32, die sich mit steigendem Druck immer weiter verkleinert.

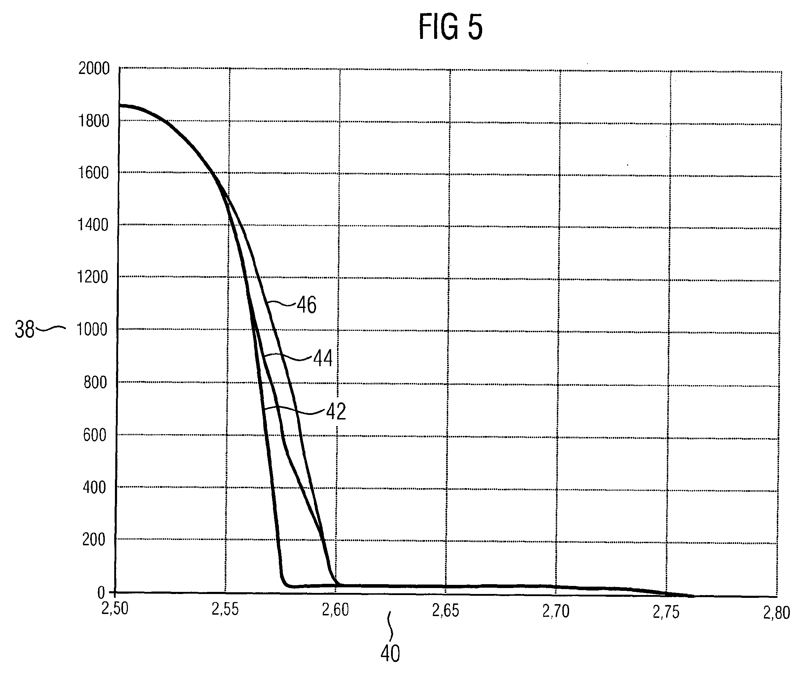

Die FIG 5 zeigt nun den Dampfmassenstrom 38 während des Schließvorgangs des Schnellschlussventils 1, aufgetragen gegen die Zeit 40 in einem kritischen Betriebszustand, d. h. bei vergleichsweise hohen Dampfmassenströmen verursacht durch einen hohen Differenzdruck 34 für das Schnellschlussventil aus FIG 1 (Kurve 42), für das Schnellschlussventil 1 aus FIG 2 (Kurve 44) sowie für ein Schnellschlussventil 1 mit einer Blende mit druckabhängiger Querschnittsfläche, wie in FIG 4 dargestellt (Kurve 46).

Gegenüber der Kurve 42 ist bei den Kurven 44 und 46 die Schließzeit des Schnellschlussventils 1 verlängert. Sowohl die hubabhängige Querschnittsfläche der Blende als auch die druckabhängige Querschnittsfläche der Blende zeigen also das gewünschte Verhalten im Störfall.

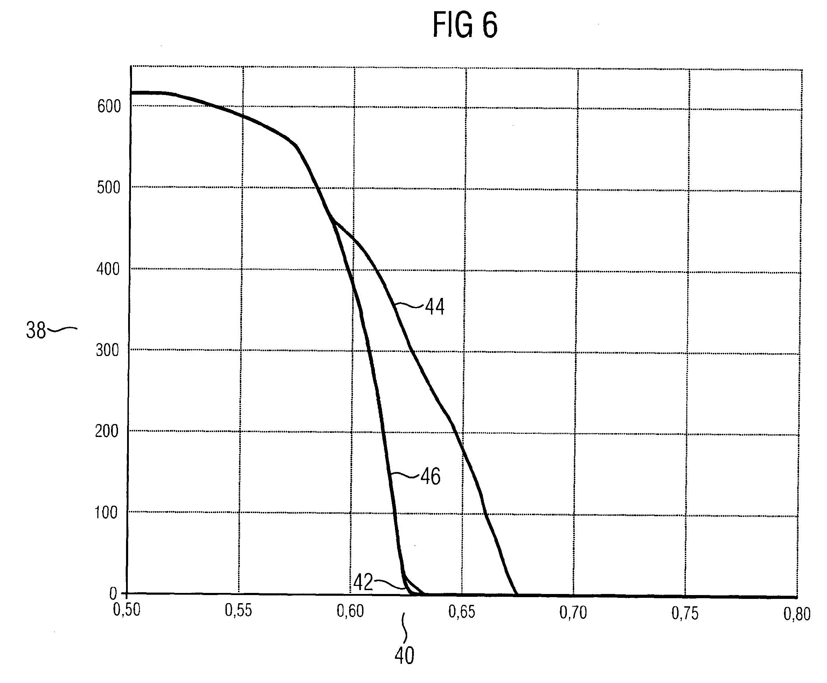

Der deutliche Vorteil der hubabhängigen Querschnittsfläche zeigt sich in der FIG 6. Hier ist wiederum der Dampfmassenstrom 38 gegen die Zeit aufgetragen während eines Schnellschlussvorgangs des Schnellschlussventils 1. Dabei ist hier jedoch kein Störfall, sondern der Nominalfall mit wesentlich geringeren Dampfmassenströmen gegenüber der Situation in FIG 5 dargestellt. Gegenüber der Kurve 42 ist hier die Kurve 46 kaum verschoben, während die Kurve 44 wiederum eine deutliche Verlängerung des Schließvorgangs zeigt. Die Verschließzeit eines Schnellschlussventils mit einer Blende mit druckabhängiger Querschnittsfläche ist also im Gegensatz zur hubabhängigen Querschnittsfläche im Nominalfall wesentlich geringer, was im Nominalfall auch erwünscht ist. Somit kann ein derartiges Schnellschlussventil 1 eine Verlangsamung der Schließgeschwindigkeit nur in kritischen Betriebszuständen bewerkstelligen und beeinflusst nicht die zuverlässige Funktion im Nominalbetrieb.

## Patentansprüche

1. Schnellschlussventil (1),
insbesondere für eine Dampfturbine,
wobei das Schnellschlussventil (1) mit einer regelbaren Schließgeschwindigkeit ausgebildet ist,
wobei das Schnellschlussventil (1) zwischen einem ersten und einem zweiten Druckraum (2, 4) angeordnet ist, mit einer in einem Ventilgehäuse (8) angeordneten Hubkolbenstange (6) und einem Hubraum (14) zur Regelung der Schließgeschwindigkeit, wobei der Hubraum (14) mindestens eine Begrenzungsfläche umfasst, die mit der Hubkolbenstange (6) verbunden ist,
wobei einem Auslasskanal des Hubraums (14) eine Blende (30) mit veränderlichem Querschnitt zugeordnet ist,
**dadurch gekennzeichnet, dass**
die Blende (30) derart ausgelegt ist, dass der Querschnitt von der Druckdifferenz zwischen dem ersten und dem zweiten Druckraum (2, 4) abhängig ist.

2. Schnellschlussventil (1) nach Anspruch 1,
bei dem die Blende (30) derart ausgelegt ist, dass sich der Querschnitt der Blende (30) bei einer Erhöhung der Druckdifferenz verkleinert.

3. Schnellschlussventil (1) nach Anspruch 1 oder 2,
bei dem zwischen dem ersten Druckraum (2) und dem zweiten Druckraum (4) ein Verbindungskanal (24) angeordnet ist, in dem ein mit einer Feder verbundener Schieber (26) angeordnet ist.

4. Schnellschlussventil (1) nach Anspruch 3,
bei dem der Schieber (26) mit der Blende (30) mechanisch verbunden ist.

5. Verfahren zum Betreiben eines Schnellschlussventils (1), insbesondere für eine Dampfturbine,
wobei das Schnellschlussventil (1) mit einer regelbaren Schließgeschwindigkeit ausgebildet wird,
wobei das Schnellschlussventil (1) zwischen einem ersten und einem zweiten Druckraum (2, 4) angeordnet wird,
wobei in einem Ventilgehäuse (8) eine Hubkolbenstange (6)
und ein Hubraum zur Regelung der Schließgeschwindigkeit ausgebildet wird,
wobei in einem Auslasskanal des Hubraums (14) eine Blende (30) mit einem veränderlichen Querschnitt zugeordnet wird, **dadurch gekennzeichnet, dass**
die Blende (30) derart ausgelegt wird, dass der Querschnitt von der Druckdifferenz zwischen dem ersten und dem zweiten Druckraum (2, 4) abhängig ist.

6. Verfahren nach Anspruch 5,
wobei die Schließgeschwindigkeit in Abhängigkeit von der Druckdifferenz zwischen dem ersten und dem zweiten Druckraum (2, 4) geregelt wird.

7. Verfahren nach Anspruch 6,
bei dem die Schließgeschwindigkeit bei einer Erhöhung der Druckdifferenz verlangsamt wird.

8. Dampfturbine mit einem Schnellschlussventil (1) nach Anspruch 1 bis 4.

9. Gas- und Dampfturbinenanlage mit einer Dampfturbine nach Anspruch 8.

10. Verwendung eines Schnellschlussventils (1),
das mit dem Verfahren nach Anspruch 5 oder 6 betrieben wird, in einer Dampfturbine.

## Claims

1. Quick-closing valve (1),
in particular for a steam turbine,
wherein the quick-closing valve (1) is formed with a controllable closing speed,
wherein the quick-closing valve (1) is arranged between a first and a second pressure chamber (2, 4), with a piston rod (6) arranged in a valve housing (8) and a piston-swept volume (14) for controlling the closing speed, wherein the piston-swept volume (14) comprises at least one delimiting surface which is connected to the piston rod (6),
wherein an orifice (30) with variable cross section is assigned to an outlet duct of the piston-swept volume (14), **characterized in that**
the orifice (30) is designed such that the cross section is dependent on the pressure difference between the first and second pressure chambers (2, 4).

2. Quick-closing valve (1) according to Claim 1,
in which the orifice (30) is designed such that the cross section of the orifice (30) reduces in the event of an increase in the pressure difference.

3. Quick-closing valve (1) according to Claim 1 or 2,
in which a connecting duct (24) is arranged between the first pressure chamber (2) and the second pressure chamber (4), a slider (26) connected to a spring being arranged therein.

4. Quick-closing valve (1) according to Claim 3,
in which the slider (26) is mechanically connected to the orifice (30).

5. Method for operating a quick-closing valve (1),
in particular for a steam turbine,
wherein the quick-closing valve (1) is formed with a controllable closing speed,
wherein the quick-closing valve (1) is arranged between a first and a second pressure chamber (2, 4),
wherein a piston rod (6) and a piston-swept volume for controlling the closing speed are formed in a valve housing (8),
wherein an orifice (30) with a variable cross section is assigned to an outlet duct of the piston-swept volume (14), **characterized in that**
the orifice (30) is designed such that the cross section is dependent on the pressure difference between the first and second pressure chambers (2, 4).

6. Method according to Claim 5,
wherein the closing speed is controlled in dependence on the pressure difference between the first and the second pressure chambers (2, 4).

7. Method according to Claim 6,
in which the closing speed is slowed in the event of an increase in the pressure difference.

8. Steam turbine having a quick-closing valve (1) according to Claims 1 to 4.

9. Gas and steam turbine plant having a steam turbine according to Claim 8.

10. Use of a quick-closing valve (1),
which is operated by the method according to Claim 5 or 6, in a steam turbine.

## Revendications

1. Vanne (1) à fermeture rapide,
notamment pour une turbine à vapeur, la vanne (1) à fermeture rapide étant constituée en ayant une vitesse de fermeture réglable,
dans laquelle la vanne (1) à fermeture rapide est montée entre une première et une deuxième chambres (2, 4) sous pression, comprenant une tige (6) de piston alternatif monté dans un corps (8) de vanne et une chambre (14) de déplacement pour la régulation de la vitesse de fermeture, la chambre (14) de déplacement comprenant au moins une surface de démarcation, qui est reliée à la tige (6) du piston alternatif,
dans laquelle un diaphragme (30) de section transversale variable est associé à un canal de sortie de la chambre (14) de déplacement,
**caractérisé en ce que**
le diaphragme (30) est conçu de manière à ce que la section transversale dépende de la différence de pression entre la première et la deuxième chambres (2, 4) sous pression.

2. Vanne (1) à fermeture rapide selon la revendication 1, dans laquelle le diaphragme est conçu de manière à ce que la section transversale du diaphragme (30) diminue si la différence de pression augmente.

3. Vanne (1) à fermeture rapide selon les revendications 1 ou 2, dans laquelle entre la première chambre (2) sous pression et la deuxième chambre (4) sous pression, est disposé un canal (24) de communication dans lequel est disposé un coulisseau (26) relié à un ressort.

4. Vanne (1) à fermeture rapide selon la revendication 3, dans laquelle le coulisseau (26) est relié mécaniquement au diaphragme (30).

5. Procédé pour faire fonctionner une vanne (1) à fermeture rapide, notamment pour une turbine à vapeur, la vanne (1) à fermeture rapide étant constituée en ayant une vitesse de fermeture réglable,
dans lequel la vanne (1) à fermeture rapide est montée entre une première et une deuxième chambres (2, 4) sous pression,
dans lequel une tige (6) de piston alternatif et une chambre de déplacement pour le réglage de la vitesse de fermeture sont constituées dans un corps (8) de vanne, dans lequel, dans un canal de sortie de la chambre (14) de déplacement, un diaphragme (30) est associé à une section transversale variable,
**caractérisé en ce que**
on conçoit le diaphragme (30) de manière à ce que la section transversale dépende de la différence de la pression entre la première et la deuxième chambres (2, 4) sous pression.

6. Procédé suivant la revendication 5,
dans lequel on règle la vitesse de fermeture en fonction de la différence de pression entre la première et la deuxième chambres (2, 4) sous pression.

7. Procédé suivant la revendication 6,
dans lequel on diminue la vitesse de fermeture si la différence de pression augmente.

8. Turbine à vapeur ayant une vanne (1) à fermeture rapide suivant les revendications 1 à 4.

9. Installation de turbine à gaz et de turbine à vapeur ayant une turbine à vapeur suivant la revendication 8.

10. Utilisation d'une vanne (1) à fermeture rapide,
qui fonctionne par le procédé suivant la revendication 5 ou 6 dans une turbine à vapeur.
